# FASCICULE DE BREVET EUROPEEN

(11) **EP 0 747 710 B1**
(45) Date de publication et mention de la délivrance du brevet: **03.05.2000**
(21) Numéro de dépôt: 96401146.4
(22) Date de dépôt: 29.05.1996
(51) Int. Cl.: G01P 3/60

(54) **Système pour la détection et la surveillance de la vitesse de rotation d'au moins un rotor et de la vitesse de rotation d'au moins un moteur d'un aéronef à voilure tournante, tel qu'un hélicoptère**
System zum Feststellen und Überwachen der Umdrehungsgeschwindigkeit mindestens eines Rotors und der Drehzahl mindestens eines Motors eines Drehflügelflugzeuges, wie z. B. eines Hubschraubers
System for detecting and monitoring the rotation speed of at least one rotor and the rotation speed of at least one motor of a rotary-wing aircraft, e.g. helicopter

(30) Priorité: 08.06.1995 FR 9506759
(43) Date de publication de la demande: 11.12.1996
(73) Titulaire: EUROCOPTER, F-13725 Marignane Cédex (FR)
(72) Inventeur: Germanetti, Serge Alexandre, 13005 Marseille (FR)
(74) Mandataire: Bonnetat, Christian

(56) Documents cités:
- DE-A- 3 736 110
- GB-A- 2 057 693
- GB-A- 2 058 358
- US-A- 3 826 985
- US-A- 4 179 938

## Description

La présente invention concerne un système pour la détection et la surveillance de la vitesse de rotation d'au moins un rotor et de la vitesse de rotation d'au moins un moteur d'un aéronef à voilure tournante, tel qu'un hélicoptère.

Pour différentes raisons exposées ci-après, il est nécessaire, sur un aéronef à voilure tournante, tel qu'un hélicoptère, de détecter, d'une part, la vitesse de rotation du rotor, au niveau de la boîte de transmission principale, et, d'autre part, la vitesse de rotation du ou des moteurs (turbine libre), et d'afficher ces informations sur le tableau de bord du poste de pilotage. Dans un hélicoptère monomoteur, il est détecté et affiché une seule indication (N_{R}) pour le nombre de tours par minute du rotor (vitesse de rotation du rotor) et une seule indication (N_{TL}) pour le nombre de tours par minute de la turbine libre unique (vitesse de rotation de la turbine). Si l'hélicoptère est un appareil bimoteur, une indication N_{R} et deux indications N_{TL} seront bien entendu fournies. Pour un hélicoptère trimoteur, les indications seraient au nombre de quatre, etc ...

De façon usuelle, la détection de la vitesse de rotation (nombre de tours par minute) pour le rotor (N_{R}) comme pour la turbine libre (N_{TL}) peut être effectuée à l'aide d'une roue dentée, solidaire en rotation du rotor (ou de la turbine), associée à un capteur électromagnétique, constitué d'un aimant permanent et d'un enroulement. Lorsqu'une dent de la roue se trouve en face du capteur, le flux est maximal, tandis que, lorsqu'une encoche se trouve devant le capteur, le flux est minimal. Ainsi, au passage de chaque dent, il se produit une variation de flux qui induit une impulsion électrique. Les impulsions électriques ont une fréquence f égale au nombre de variations de flux par seconde, soit f = (N_{R} x n) / 60. Comme n, le nombre de dents, est constant, la fréquence du signal est proportionnelle à N_{R}. Les signaux sont envoyés à un convertisseur fréquence-tension, relié à un galvanomètre. Le principe de mesure de la vitesse de rotation de la turbine libre (N_{TL}) ou, éventuellement, du générateur de gaz (N_{G}) est le même.

Dans de tels systèmes usuels, dans le cas d'un appareil monomoteur par exemple, l'indicateur des vitesses de rotation est muni de deux aiguilles, une pour chacun des paramètres N_{R}/N_{TL}, qui fonctionne de sorte que ces deux aiguilles doivent être alignées (superposées) en vol normal. Un désalignement de ces aiguilles signifie qu'il existe un problème mécanique, soit au niveau du moteur, soit au niveau de la boîte de transmission principale de la puissance mécanique au rotor, ou encore une rupture d'un arbre de transmission, un glissement de la boîte de transmission principale, entre autres.

Actuellement, les indications N_{R} et N_{TL} sont graduées de manière que, au rapport de démultiplication près, les deux (ou plus) graduations se trouvent en vis-à-vis lorsque le ou les moteurs sont embrayés sur la boîte de transmission principale. A cet égard, on notera que N_{R}, en fonctionnement normal, est compris entre environ 200 tr/mn et 400 tr/mn selon le diamètre du rotor (vitesse en bout de pale V ≤ 220 m/s), un turbomoteur de faible puissance tournant souvent à environ 35000 tr/mn, le constructeur le livrant en général, grâce à un réducteur incorporé, avec une prise de mouvement à environ 6000 tr/mn.

Toutefois, au démarrage et lors de l'arrêt du turbomoteur, les deux aiguilles de l'indicateur double ne se déplacent pas tout à fait simultanément pour les raisons indiquées par la suite et, en particulier, la présence d'un embrayage. (En revanche, si un désalignement apparaît en vol, celui-ci peut avoir pour origine éventuelle une usure prématurée ou autre).

En effet, les deux aiguilles d'un tel indicateur double sont déplacées par des galvanomètres dont les chaînes de mesure n'ont pas exactement la même précision, avec pour conséquence un léger désalignement lié aux mesures et non à l'ensemble de transmission de puissance. Si ce désalignement devient trop important, il peut être interprété par l'équipage comme, par exemple, une anomalie au niveau du turbomoteur, ou autre anomalie mécanique. Pour éviter cela, on est obligé d'effectuer des tarages et des réglages de ces appareillages sur l'aéronef, ce qui se traduit par des temps d'exécution importants engendrant des coûts correspondants.

Pour des raisons de sécurité, il est aujourd'hui recommandé d'utiliser un indicateur de N_{R} autonome. Par exemple, on peut récupérer de l'énergie à partir de la rotation de la roue dentée précédemment citée, associée au capteur électromagnétique, entraînée par la rotation du rotor.

Une autre solution consisterait à utiliser deux chaînes de mesure très précises pour N_{R} et N_{TL}, cela pour éviter toute erreur. Cependant, deux inconvénients en résultent :
- le coût,
- une chaîne très précise n'est pas forcément autonome.

On notera que, par le terme "chaîne très précise", on doit comprendre un système à base de galvanomètres asservis avec retour de précision, qui exigent un niveau d'énergie non négligeable.

Par conséquent, jusqu'à présent, on utilise un système à base d'un galvanomètre simple et autonome pour la mesure de N_{R}, au niveau de la première chaîne, et d'un galvanomètre asservi pour la mesure de N_{TL}, au niveau de la seconde chaîne. Toutefois, il en résulte des problèmes de réglage obligeant à équilibrer les aiguilles, lors de la mise au point des appareils, au moyen de potentiomètres appropriés pour réaliser lesdits réglages.

On notera que, s'il n'y a plus d'alimentation normale en énergie à bord de l'aéronef, il demeure généralement en réserve l'énergie fournie par les batteries. Cependant, il s'avère que, avec un système à base de galvanomètres, les batteries se déchargeant au cours d'un vol de secours d'une durée de l'ordre de la demi-heure, fixée par des normes, il existe un risque potentiel particulier. C'est ainsi que, lors de tels vols, l'équipage a pu voir les indications de N_{R} et N_{TL} décroître, si ni l'une ni l'autre n'est autonome, en raison d'une chute de puissance des batteries. Constatant la diminution de N_{R}, l'équipage a pu interpréter ce fait comme un blocage progressif du rotor. Comme N_{TL} diminue simultanément sans pour autant que le moteur soit en panne (N_{G}, nombre de tours du générateur de gaz, ayant une valeur vraisemblable), l'équipage a pu attribuer la panne à un blocage de la boîte de transmission principale, entraînant la mise en oeuvre d'une procédure d'atterrissage d'urgence en autorotation, laquelle aurait pu être évitée. L'autonomie de la chaîne relative à la mesure de N_{R} apparaît donc nécessaire.

Actuellement, l'aiguille d'un galvanomètre simple ne fonctionnant pas avec un retour de position, notamment au niveau de la mesure de N_{R}, on ne sait pas exactement où elle doit se positionner et, par suite, on ne sait pas piloter correctement l'aiguille correspondant à N_{TL} pour la rapprocher de la première et éliminer les écarts par un réglage approprié, cela même si la mesure de N_{TL} est précise à l'origine. En pratique, on ne peut pas affirmer que la recopie de N_{R} par l'aiguille correspond à l'ordre donné.

La présente invention a pour but d'éviter cet inconvénient.

A cet effet, le système pour la détection et la surveillance de la vitesse de rotation N_{R} d'au moins un rotor et de la vitesse de rotation N_{TL} d'au moins un moteur d'un aéronef à voilure tournante, tel qu'un hélicoptère, comportant des premiers et seconds moyens de détection desdites vitesses de rotation N_{R} et N_{TL}, respectivement, fournissant des signaux relatifs auxdites vitesses à des premiers et seconds moyens respectifs de traitement desdits signaux, reliés à des moyens d'affichage d'indications relatives auxdites vitesses de rotation N_{R} et N_{TL}, est remarquable, selon l'invention, en ce que lesdits seconds moyens de traitement comprennent une unité électronique de traitement recevant, d'une part, les signaux relatifs à la vitesse de rotation N_{TL} d'au moins un moteur et, d'autre part, les signaux relatifs à la vitesse de rotation N_{R} d'au moins un rotor, et en ce que ladite unité est apte à comparer les valeurs de N_{R} et N_{TL} de sorte que, si la différence entre les valeurs de N_{R} et N_{TL} est inférieure ou égale à un seuil prédéterminé, ladite unité commande l'affichage de N_{R} et N_{TL}, tel que N_{R} et N_{TL} soient alignées sur lesdits moyens d'affichage.

Ainsi, en pouvant, grâce à ladite unité électronique de traitement, aligner la valeur de N_{TL} sur la valeur de N_{R} (bien sûr dans des conditions par ailleurs normales), le système selon l'invention permet le découplage entre d'éventuelles incertitudes au niveau des mesures et des pannes ou incidents mécaniques susceptibles de se produire.

Avantageusement, ladite unité électronique de traitement recevant, d'une part, la valeur de N_{R} à l'entrée desdits premiers moyens de traitement et, d'autre part, la valeur de N_{R} à la sortie desdits premiers moyens de traitement, ladite unité est apte à comparer lesdites deux valeurs, de façon à fournir, le cas échéant, un signal de panne.

De préférence, lesdits moyens d'affichage sont constitués par un indicateur à cristaux liquides, notamment des cristaux liquides dits dédiés.

Le système selon l'invention comprend ainsi, avantageusement, un indicateur à cristaux dédiés, pilotés par un microprocesseur (l'unité électronique de traitement), c'est-à-dire comportant des segments qui s'allument au fur et à mesure que la valeur de l'information correspondante (N_{R} ou N_{TL}) augmente, ce qui se traduit par des graduations qui s'allument progressivement, aidant à résoudre le problème d'alignement. Par réglage, chaque segment peut correspondre à 2, voire 3 tr/mn du rotor, c'est-à-dire de l'ordre de grandeur de la précision demandée pour le pilotage correct d'un hélicoptère.

Selon une autre caractéristique de l'invention, le système comprend, dans ce cas, des premiers et seconds moyens de pilotage respectifs dudit indicateur, prévus entre lesdits premiers et seconds moyens de traitement, respectivement, et ledit indicateur.

Par ailleurs, lesdits premiers et seconds moyens de détection peuvent comprendre, à chaque fois, une roue dentée, solidaire en rotation du rotor ou du moteur, associée à un capteur électromagnétique.

De préférence, lesdits premiers moyens de traitement, comprenant un compteur des dents de ladite roue, sont alors alimentés, de façon autonome, en énergie électrique récupérée au niveau de ladite roue ou dudit capteur. L'énergie récupérée peut également alimenter lesdits premiers moyens de pilotage.

i Selon encore une autre caractéristique de l'invention, à bas régime, l'affichage de la vitesse de rotation N_{R} est assuré par l'intermédiaire de ladite unité électronique de traitement, l'énergie fournie par l'alimentation autonome n'étant pas alors suffisante (entre 0 et 150-200 tr/mn).

De plus, une des dents de la roue associée à la détection de N_{R} peut présenter une caractéristique différente par rapport aux autres dents, notamment une surface active plus importante, fournissant ainsi un signal exploitable, par exemple, pour des travaux de réglages dynamiques au banc du rotor principal, ou un signal couplé à une observation stroboscopique, ou tout autre moyen connu, cela étant réalisé en vol pour des travaux consécutifs de réglage de l'équilibrage dynamique du rotor au sol.

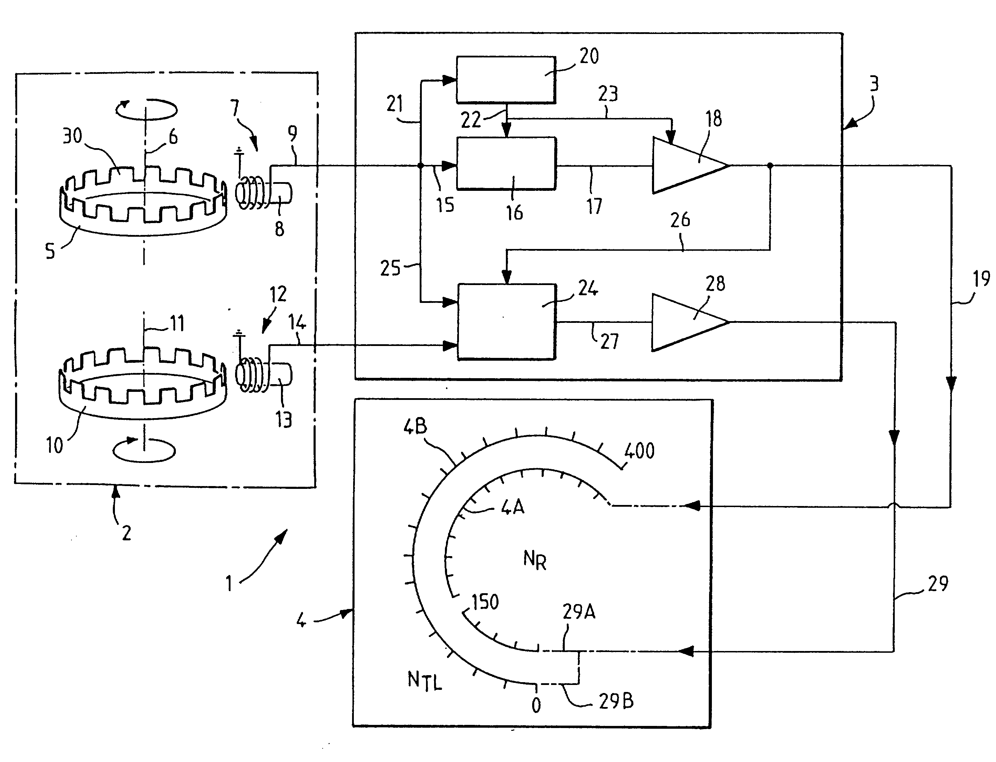

La figure unique du dessin annexé fera bien comprendre comment l'invention peut être réalisée.

Cette figure montre schématiquement un exemple de réalisation d'un système 1 selon l'invention, dans lequel on a considéré, à titre d'exemple, le cas d'un aéronef à voilure tournante, notamment un hélicoptère, comportant un seul rotor principal et un seul moteur (turbine). Bien entendu, le système selon l'invention, comme on l'a déjà vu, est généralisable au cas d'un aéronef comportant plusieurs moteurs (plusieurs valeurs de N_{TL}) et, éventuellement, deux rotors (deux valeurs de N_{R}). On pourrait également envisager d'exploiter d'autres paramètres, notamment liés au moteur, tels que N_{G} cité ci-dessus.

De façon générale, le système 1 pour la détection et la surveillance de la vitesse de rotation (N_{R}) du rotor et de la vitesse de rotation (N_{TL}) du moteur de l'aéronef comprend un ensemble 2 de détection desdites vitesses de rotation N_{R} et N_{TL}, fournissant des signaux relatifs auxdites vitesses à un ensemble 3 de traitement desdits signaux, relié à des moyens d'affichage 4 d'indications relatives auxdites vitesses de rotation du rotor (N_{R}) et du moteur (N_{TL}). Lesdits moyens d'affichage 4 sont constitués, selon l'invention, d'un indicateur à cristaux liquides, dont l'écran présente deux zones 4A et 4B pour l'affichage de N_{R} et N_{TL}, respectivement, comportant un certain nombre de segments pour l'affichage, comme on le verra plus en détail par la suite.

Plus précisément, l'ensemble de détection 2 comporte une première roue dentée 5, solidaire en rotation du rotor de l'aéronef, symbolisé par l'axe 6, ladite roue dentée étant associée à un capteur électromagnétique 7, constitué d'un aimant permanent 8 et d'un enroulement 9. De même, une seconde roue dentée 10, solidaire en rotation de l'arbre de sortie du moteur (turbine) de l'aéronef, symbolisé par l'axe 11, est associée à un capteur électromagnétique 12, constitué d'un aimant permanent 13 et d'un enroulement 14. Comme déjà indiqué, la détection de vitesse est basée sur la variation du flux magnétique, induisant des impulsions électriques (les signaux fournis aux moyens de traitement 3), selon que le capteur, lors de la rotation de la roue, se trouve devant une dent ou l'encoche entre deux dents.

Par ailleurs, l'ensemble de traitement 3 comporte essentiellement deux "voies" ou "chaînes" de traitement des signaux issus des moyens de détection 2. Une première voie, reliée au capteur 7 de la vitesse de rotation N_{R} du rotor par la liaison 15, présente une première unité électronique de traitement 16. En fait, la roue dentée 5, solidaire en rotation du rotor, c'est-à-dire située au niveau de la boîte de transmission principale, comprend un grand nombre de dents (80 par exemple) et, pour calculer la vitesse de rotation N_{R}, il suffit sur une durée déterminée (correspondant à un ou deux tours du rotor) de compter les dents passant devant le capteur grâce à l'unité 16, ce nombre de dents correspondant alors directement au nombre de segments à afficher sur l'indicateur 4 (chaque segment équivaut par exemple à 3 tours par minute, ce qui constitue la performance demandée). Ce comptage, affecté avantageusement d'une mémoire glissante, peut assurer de plus le filtrage associé à des variations de la vitesse de rotation du rotor. Dans ce cas, au lieu d'afficher la valeur de N_{R} qui vient d'être indiquée, on peut envisager l'utilisation d'une moyenne, calculée à partir de différentes valeurs de N_{R}. On peut par exemple mettre en mémoire quatre valeurs consécutives (quatre comptages successifs) et en faire la somme. Le principe de la mémoire glissante est donc d'utiliser un certain nombre de comptages, "remis à jour" au bout d'un intervalle de temps prédéterminé. Il s'agit en quelque sorte d'un filtrage du premier ordre, à constante de temps prédéterminée, ce qui élimine la nécessité d'un filtrage plus complexe nécessitant un microprocesseur évolué, gros consommateur d'énergie.

L'unité 16 est reliée, par une liaison 17, à des premiers moyens de pilotage 18 des diodes à cristaux liquides de la zone 4A, relative à l'affichage de N_{R}, de l'indicateur 4, à laquelle les moyens de pilotage 18 sont reliés par la liaison 19. Comme il est tout à fait avantageux que cette voie soit autonome, c'est-à-dire ne dépende pas d'une alimentation électrique extérieure (alimentation générale de l'aéronef, batteries), il est prévu une récupération d'énergie, symbolisée en 20, prélevée au niveau de la sortie du capteur 7 (liaison 21) ou, éventuellement, à partir de la rotation de la roue 5, et alimentant, d'une part, le compteur de dents 16 (faible consommateur d'énergie) par la liaison 22 et, d'autre part, les moyens de pilotage 18 par la liaison 23.

La seconde voie, reliée au capteur 12, présente une seconde unité électronique de traitement (microprocesseur) 24. Le principe de traitement des signaux issus du capteur 12 demeure le même que précédemment. Cependant, le microprocesseur 24 présente un certain nombre d'autres fonctions, explicitées par la suite et, pour cela, il est relié, comme montré, à la sortie du capteur 7 (liaison 25) et à la sortie des moyens de pilotage 18 (liaison 26). Comme précédemment, le microprocesseur 24 est relié, par une liaison 27, à des seconds moyens de pilotage 28 des diodes à cristaux liquides de la zone 4B (affichage N_{TL}), et à une partie de la zone 4A (faible régime), auxquelles les moyens de pilotage 28 sont reliés par la liaison 29.

Ainsi, sur la voie correspondant à N_{TL}, on met en oeuvre un agencement un peu plus complexe que sur la voie N_{R}, utilisant un microprocesseur. Il n'est pas nécessaire qu'une telle voie ou chaîne soit autonome car, par suite d'une perte accidentelle d'alimentation électrique à bord de l'aéronef et en cas de panne de moteur, l'indication relative à N_{TL} devient inutile puisque le (ou les) moteur(s) ne fonctionne(nt) plus normalement. En revanche, l'indication relative à N_{R} devient indispensable pour piloter l'aéronef (hélicoptère) en vol en autorotation (le seul alors possible). En effet, on sait que le premier geste à faire, dans ce cas, est de baisser le levier de pas collectif au "plus petit pas" (sinon le régime du rotor diminue, la force centrifuge et la portance diminuent encore plus rapidement, l'équilibre des pales est rompu, et l'appareil n'est plus contrôlable) et de vérifier immédiatement le régime du rotor. Eventuellement, on peut cabrer l'appareil si le régime est trop faible ou ou mettre un peu de pas collectif s'il est trop fort.

Pour que la première voie (N_{R}) soit autonome (alimentation en énergie suffisante), il faut que le rotor tourne à environ 150-200 tr/mn (50% du régime maximal). En dessous de ces valeurs, c'est-à-dire entre 0 et 150 tr/mn, le microprocesseur 24, grâce aux informations recueillies par les liaisons 25 et 26 et par l'intermédiaire des moyens de pilotage 28, assure l'affichage des valeurs de N_{R} (liaison 29A) pour ces valeurs, outre sa fonction "normale" d'affichage des valeurs de N_{TL} (liaison 29B). Au-delà de ce seuil, la voie autonome fournit l'information relative à N_{R} et la voie non autonome fournit l'information relative à N_{TL}. Si l'écart est inférieur, par exemple, à 5 tr/mn, exprimé en nombre de tours du rotor, les deux informations sont affichées en vis-à-vis [graduations (segments) allumées au même niveau] grâce au processeur 24. En d'autres termes, comme on l'a dit précédemment, elles sont alignées sur l'indicateur 4. En pratique, des réglages préalables, à l'aide de potentiomètres notamment, ne sont plus nécessaires, ce qui représente un gain de temps appréciable.

L'indicateur 4 de N_{R}/N_{TL} est muni de cristaux liquides, basés avantageusement sur la technologie dite à "cristaux dédiés", préférée à celle des matrices actives. En effet, cette dernière pilote chaque point d'un écran. Par suite, si une panne intervient sur cet écran, celle-ci peut se produire à la fois sur l'une ou l'autre des deux informations N_{R} et N_{TL}, voire sur les deux, ce qui serait bien entendu nuisible à la sécurité du système. La technologie dite à "cristaux dédiés", quant à elle, permet d'améliorer cette situation. De fait, on prédéfinit, dans ce cas, un certain nombre de points pour la représentation d'une symbologie (segments). En conséquence, les informations N_{R} deviennent indépendantes de celles N_{TL}. De plus, grâce à un microprocesseur qui est "dédié" au pilotage des segments de N_{R} et un autre à ceux de N_{TL}, les deux chaînes relatives à N_{R} et N_{TL}, respectivement, sont pratiquement indépendantes. Cette technologie permet, en outre, de dissocier les segments "basse vitesse" de N_{R} (en dessous de 150-200 tr/mn) des autres segments en pilotant, au démarrage par exemple, les segments "basse vitesse" de N_{R} par le microprocesseur 24, puis les autres segments de façon autonome. Ce résultat est impossible à obtenir à partir d'un galvanomètre.

Sur l'indicateur de N_{R}/N_{TL}, il est également possible de prévoir l'indication numérique très précise de N_{R} (c'est-à-dire au moins au tour par minute près) à partir de la valeur numérique de N_{R} transmise par la liaison 29.

Par ailleurs, les segments de l'indicateur sont situés sur une plaque, disposée dans un verre, qui se polarise, et s'ouvrent puis se ferment, laissant passer de la lumière à l'ouverture. Les moyens de pilotage 18 et 28 des cristaux liquides constituent donc un appareillage électronique qui ouvre et ferme ces fenêtres. En conséquence, il existe une relation directe entre le nombre de segments allumés et l'ordre d'ouverture et de fermeture par lesdits moyens de pilotage.

En récupérant, à la sortie des premiers moyens de pilotage 18, associé à la voie autonome de détection et d'affichage de N_{R}, les ordres d'ouverture et de fermeture correspondants et en envoyant ceux-ci sur la seconde unité électronique de traitement 24, associée à la voie (non autonome) de détection et d'affichage de N_{TL}, ladite unité dispose de trois informations :
- N_{R} (comme on l'a vu ci-dessus par la liaison 25),
- N_{TL},
- la valeur affichée de N_{R}, à la sortie de la chaîne autonome (liaison 26).

Ainsi, ladite unité 24 peut :
- grâce à la sortie de la chaîne autonome, surveiller si la valeur de N_{R} affichée est bien analogue à la valeur qu'elle reçoit directement (liaison 25) et fournir éventuellement un signal de panne si un écart substantiel existe entre ces deux valeurs,
- dans la mesure où les chaînes sont précises à ± 3 tr/mn, décider d'allumer les segments correspondant à N_{TL} exactement en vis-à-vis de ceux allumés de N_{R}, si les deux signaux N_{R} et N_{TL} présentent un écart inférieur ou égal à 3 tr/mn, d'où un alignement parfait des segments sur le cadran de l'indicateur 4.

Si l'on veut indiquer une panne au pilote à partir d'un écart de 5 tr/mn (par exemple), on force alors ladite unité à afficher cette différence en allumant un segment de plus ou de moins pour N_{R}.

Ainsi, ladite unité peut distinguer entre la performance de la chaîne de mesure et le glissement éventuel, par exemple, de la boîte de transmission principale indiquant un problème mécanique sur cette dernière. Il en résulte une interprétation et une surveillance automatiques.

En d'autres termes, ladite seconde unité électronique de traitement 24 fonctionne pour traiter le signal N_{R} et le signal N_{TL}, comparer les signaux N_{R} et N_{TL} pour détecter des pannes, et faire l'acquisition du résultat du traitement de la voie autonome de façon à vérifier que l'affichage de N_{R} est correct.

Si N_{TL} calculé est proche de N_{R} autonome, on aligne N_{TL} sur la valeur exacte de N_{R} affichée sur la voie autonome. Si l'écart, exprimé en nombres de tour par minute de rotor, est supérieur à un seuil, on met en évidence la différence en affichant N_{TL} calculé et N_{R} autonome par décalage d'un segment de N_{TL}. Si N_{R} calculé est différent de N_{R} autonome, un message de panne est affiché.

Parmi les dents de la roue 5, associée à la détection de la vitesse de rotation du rotor N_{R}, l'une (30) présente une caractéristique différente par rapport aux autres : front montant différent ou encore, comme représenté, surface active plus importante, notamment.

Le microprocesseur constate, au passage de cette dent particulière 30, un blocage de flux et une variation inhabituelle de courant. Sur l'une de ses voies de sortie, il émet alors un signal, qui correspond au signal élaboré par un instrument approprié, utilisé jusqu'à présent, lorsque les pales d'un rotor passent dans une position azimutale prédéterminée. Il en résulte un gain de poids et d'encombrement, ledit instrument n'étant plus nécessaire. Cette information à disposition de l'utilisateur à la sortie du microprocesseur peut être exploitée par exemple lors de travaux de réglages dynamiques au banc du rotor principal. Il s'agit donc d'un outillage intégré. On notera à cet égard que l'utilisation d'un galvanomètre classique serait dans ce cas inconcevable compte tenu de la perturbation du mouvement de l'aiguille au passage de la dent particulière devant le capteur.

Par ailleurs, l'unité électronique de traitement peut posséder une autre ligne de sortie pour fournir toute information à un calculateur externe pour effectuer des calculs de contrôle de l'état du moteur, ou autre utilisation selon les besoins : maintenance, état des pannes (fonctions ou composants).

Pour augmenter le niveau d'énergie, le capteur 7 peut être modifié, permettant une variation sinusoïdale du courant entre des niveaux +iₘₐₓ et -iₘₐₓ, en y adjoignant, de part et d'autre et à faible distance de celui-ci, un aimant, l'ensemble devant être adapté pour se trouver soit vis-à-vis d'une dent de la roue, soit vis-à-vis d'un entredent, selon la rotation de celle-ci. D'autres capteurs plus performants peuvent être envisagés, sous réserve de contraintes de poids et d'encombrement.

On notera, par ailleurs, que les cristaux dédiés peuvent correspondre à deux techniques, soit transmissive, soit réflective. Dans le premier cas, ils sont éclairés sur la face arrière de l'instrument, de sorte que, lors de l'ouverture du cristal, le segment apparaît sous l'effet de cet éclairage. Cette technique consomme peu d'énergie à son niveau, mais nécessite un éclairage complémentaire. Pour assurer une autonomie de jour, la lampe arrière doit être elle-même alimentée de façon autonome, ce qui entraîne une complication supplémentaire.

Dans le second cas, les cristaux dédiés réfléchissent la lumière du jour : le segment en position ouverte fait apparaître une zone par exemple noire en arrière. En position fermée, il réfléchit la lumière vers l'observateur. Il suffit donc d'un éclairage direct par la lumière du jour, ou par une lampe de secours si l'éclairage est insuffisant ou fait défaut. La consommation électrique est toutefois quelque peu plus importante que dans le premier cas car les segments sont plus "efficaces".

En pratique, il est proposé d'utiliser une solution mixte utilisant un réflecteur "fonctionnant" à la fois en transmission et en réflection. Dans ces conditions, on obtient un cumul de la lumière naturelle et d'une lumière arrière qui "dope" le signal de façon à rendre l'indicateur très lumineux en mode normal de fonctionnement, alors qu'en mode de secours (sans éclairage arrière), l'affichage est moins lumineux, mais sans nuire à la sécurité.

Par ailleurs, il convient de choisir une technologie dite TN ("twist nematic") ou dichroïque de façon à améliorer le contraste sans consommer de courant pour l'éclairage de l'indicateur. Seuls les angles de vue et le contraste obtenus dépendent de la technologie choisie.

## Revendications

1. Système pour la détection et la surveillance de la vitesse de rotation N_{R} d'au moins un rotor et de la vitesse de rotation N_{TL} d'au moins un moteur d'un aéronef à voilure tournante, tel qu'un hélicoptère, comportant des premiers (5, 7) et seconds (10, 12) moyens de détection desdites vitesses de rotation N_{R} et N_{TL}, respectivement, fournissant des signaux relatifs auxdites vitesses à des premiers (16) et seconds (24) moyens respectifs de traitement desdits signaux, reliés à des moyens d'affichage (4) d'indications relatives auxdites vitesses de rotation N_{R} et N_{TL},
caractérisé en ce que lesdits seconds moyens de traitement comprennent une unité électronique de traitement (24) recevant, d'une part, les signaux relatifs à la vitesse de rotation N_{TL} d'au moins un moteur et, d'autre part, les signaux relatifs à la vitesse de rotation N_{R} d'au moins un rotor, et en ce que ladite unité (24) est apte à comparer les valeurs de N_{R} et N_{TL} de sorte que, si la différence entre les valeurs de N_{R} et N_{TL} est inférieure ou égale à un seuil prédéterminé, ladite unité (24) commande l'affichage de N_{R} et N_{TL}, tel que N_{R} et N_{TL} soient alignées sur lesdits moyens d'affichage (4).

2. Système selon la revendication 1,
caractérisé en ce que, ladite unité électronique de traitement (24) recevant, d'une part, la valeur de N_{R} à l'entrée desdits premiers moyens de traitement (16) et, d'autre part, la valeur de N_{R} à la sortie desdits premiers moyens de traitement (16), ladite unité (24) est apte à comparer lesdites deux valeurs, de façon à fournir, le cas échéant, un signal de panne.

3. Système selon la revendication 1 ou la revendication 2,
caractérisé en ce que lesdits moyens d'affichage sont constitués par un indicateur (4) à cristaux liquides.

4. Système selon la revendication 3,
caractérisé en ce que lesdits cristaux liquides sont des cristaux dits dédiés.

5. Système selon la revendication 3 ou la revendication 4,
caractérisé par des premiers (18) et seconds (28) moyens de pilotage respectifs dudit indicateur (4), prévus entre lesdits premiers (16) et seconds (24) moyens de traitement, respectivement, et ledit indicateur (4).

6. Système selon l'une quelconque des revendications 1 à 5,
caractérisé en ce que lesdits premiers et seconds moyens de détection comprennent, à chaque fois, une roue dentée (5 ; 10), solidaire en rotation du rotor ou du moteur, associée à un capteur électromagnétique (7 ; 12).

7. Système selon la revendication 6,
caractérisé en ce que lesdits premiers moyens de traitement, comprenant un compteur des dents (16) de ladite roue (5), sont alimentés, de façon autonome, en énergie électrique récupérée au niveau de ladite roue (5) ou dudit capteur (7).

8. Système selon la revendication 7,
caractérisé en ce que l'énergie récupérée alimente lesdits premiers moyens de pilotage (18).

9. Système selon la revendication 7 ou la revendication 8,
caractérisé en ce que, à bas régime, l'affichage de la vitesse de rotation N_{R} est assuré par l'intermédiaire de ladite unité électronique de traitement (24).

10. Système selon l'une quelconque des revendications 6 à 9,
caractérisé en ce qu'une des dents (30) de la roue (5) associée à la détection de N_{R} présente une caractéristique différente par rapport aux autres dents, notamment une surface active plus importante.

## Patentansprüche

1. System zum Erfassen und Überwachen der Drehzahl N_{R} mindestens eines Rotors und der Drehzahl N_{TL} mindestens eines Motors eines Drehflügelflugzeugs, wie eines Hubschraubers, das erste (5, 7) und zweite (10, 12) Mittel zum Erfassen der Drehzahlen N_{R} bzw. N_{TL} aufweist, die den Drehzahlen entsprechende Signale an erste (16) und zweite (24) jeweilige Mittel zur Verarbeitung der Signale liefern, die mit Anzeigemitteln (4) zur Anzeige von die Drehzahlen N_{R} und N_{TL} betreffenden Angaben verbunden sind, dadurch gekennzeichnet, dass die zweiten Verarbeitungsmittel eine elektronische Verarbeitungseinheit (24) umfassen, die einerseits die der Drehzahl N_{TL} entsprechenden Signale und andererseits die der Drehzahl N_{R} entsprechenden Signale empfängt, und dass die Einheit (24) fähig ist, die Werte von N_{R} und N_{TL} zu vergleichen, sodass wenn der Unterschied zwischen den Werten N_{R} und N_{TL} kleiner oder gleich einer vorbestimmten Schwelle ist, die Einheit (24) die Anzeige von N_{R} und N_{TL} derart steuert, dass N_{R} und N_{TL} auf den Anzeigemitteln (4) miteinander ausgerichtet sind.

2. System nach Anspruch 1, dadurch gekennzeichnet, dass wenn die elektronische Verarbeitungseinheit (24) einerseits den Wert von N_{R} am Eingang der ersten Verarbeitungsmittel (16) und andererseits den Wert von N_{R} am Ausgang der ersten Verarbeitungsmittel (16) empfängt, die Einheit (24) fähig ist, die beiden Werte zu vergleichen, um gegebenenfalls ein Störungssignal zu liefern.

3. System nach Anspruch 1 oder Anspruch 2, dadurch gekennzeichnet, dass die Anzeigemittel aus einer Flüssigkristallanzeige (4) bestehen.

4. System nach Anspruch 3, dadurch gekennzeichnet, dass die Flüssigkristalle Kristalle sind, die dediziert genannt werden.

5. System nach Anspruch 3 oder Anspruch 4, dadurch gekennzeichnet durch jeweilige erste (18) und zweite (28) Steuerungsmittel für die Anzeigeeinrichtung (4), die zwischen den ersten (16) bzw. zweiten (24) Verarbeitungsmitteln und der Anzeigeeinrichtung (4) vorgesehen sind.

6. System nach einem der Ansprüche 1 bis 5, dadurch gekennzeichnet, dass die ersten und zweiten Erfassungsmittel jeweils ein mit dem Rotor oder dem Motor drehfest verbundenes Zahnrad (5; 10) umfassen, das einem elektromagnetischen Sensor (7; 12) zugeordnet ist.

7. System nach Anspruch 6, dadurch gekennzeichnet, dass die ersten Verarbeitungsmittel, die einen Zähler für die Zähne (16) des Rades (5) umfassen, in autonomer Weise mit in Höhe des Rades (5) oder des Sensors (7) zurück gewonnener elektrischer Energie versorgt werden.

8. System nach Anspruch 7, dadurch gekennzeichnet, dass die zurück gewonnene Energie die ersten Steuerungsmittel (18) versorgt.

9. System nach Anspruch 7 oder Anspruch 8, dadurch gekennzeichnet, dass bei niedriger Drehzahl die Anzeige der Drehzahl N_{R} über die elektronische Verarbeitungseinheit (24) sichergestellt wird.

10. System nach einem der Ansprüche 6 bis 9, dadurch gekennzeichnet, dass einer der Zähne (30) des Rades (5), das der Erfassung von N_{R} zugeordnet ist, ein in bezug auf die anderen Zähne unterschiedliches Merkmal, insbesondere eine größere aktive Oberfläche, aufweist.

## Claims

1. System for detecting and monitoring the rotational speed N_{R} of at least one rotor and the rotational speed N_{TL} of at least one motor of a rotary-wing aircraft, such as a helicopter, including first (5, 7) and second (10, 12) means for detecting the said rotational speeds N_{R} and N_{TL}, respectively, delivering signals relating to the said speeds to first (16) and second (24) respective means for processing the said signals, which are connected to means (4) for displaying indications relating to the said rotational speeds N_{R} and N_{TL}, characterized in that the said second processing means comprise an electronic processing unit (24) which receives, on the one hand, the signals relating to the rotational speed N_{TL} of the at least one motor and, on the other hand, the signals relating to the rotational speed N_{R} of the at least one rotor, and in that the said unit (24) is capable of comparing the values of N_{R} and N_{TL} in such a way that, if the difference between the values of N_{R} and N_{TL} is less than or equal to a predetermined threshold, the said unit (24) controls the display of N_{R} and N_{TL} such that N_{R} and N_{TL} are aligned on the said display means (4).

2. System according to Claim 1, characterized in that, the said electronic processing unit (24) receiving, on the one hand, the value of N_{R} at the input of the said first processing means (16) and, on the other hand, the value of N_{R} at the output of the said first processing means (16), the said unit (24) is capable of comparing the said two values so as, when appropriate, to deliver a malfunction signal.

3. System according to Claim 1 or Claim 2, characterized in that the said display means consist of a liquid-crystal indicator (4).

4. System according to Claim 3, characterized in that the said liquid crystals are so-called dedicated crystals.

5. System according to Claim 3 or Claim 4, characterized by first (18) and second (28) respective means for driving the said indicator (4), which are provided between the said first (16) and second (24) processing means, respectively, and the said indicator (4).

6. System according to any one of Claims 1 to 5, characterized in that the said first and second detection means each comprise a toothed wheel (5; 10), linked in rotation with the rotor or the motor, associated with an electromagnetic sensor (7; 12).

7. System according to Claim 6, characterized in that the said first processing means, comprising a counter for the teeth (16) of the said wheel (5), are autonomously supplied with electrical energy recovered at the said wheel (5) or the said sensor (7).

8. System according to Claim 7, characterized in that the recovered energy supplies the said first drive means (18).

9. System according to Claim 7 or Claim 8, characterized in that, at low speed, the rotational speed N_{R} is displayed by means of the said electronic processing unit (24).

10. System according to any one of Claims 6 to 9, characterized in that one of the teeth (30) of the wheel (5) associated with the detection of N_{R} has a different characteristic from the other teeth, in particular a larger active surface.
